# EUROPÄISCHE PATENTSCHRIFT

(11) **EP 2 006 022 B1**
(45) Veröffentlichungstag und Bekanntmachung des Hinweises auf die Patenterteilung: **13.04.2016**
(21) Anmeldenummer: 08008466.8
(22) Anmeldetag: 05.05.2008
(51) Int. Cl.: B01L 3/02, G01N 35/10

(54) **Probenbehandlungsanordnung für eine Flüssigkeitsdosiervorrichtung**
Sample processing arrangement for a liquid metering device
Agencement de traitement d'échantillons pour un dispositif de dosage des liquides

(30) Priorität: 15.06.2007 EP 07011822
(43) Veröffentlichungstag der Anmeldung: 24.12.2008
(73) Patentinhaber: Hamilton Bonaduz AG, 7402 Bonaduz (CH)
(72) Erfinder: Hofstetter, Meinrad, 7012 Felsberg (CH); Oeltjen, Lars, Dr., 6300 Zug (CH)
(74) Vertreter: RLTG

(56) Entgegenhaltungen:
- EP-A- 0 682 258
- EP-A- 1 614 468
- EP-A- 1 745 851
- WO-A-2004/009238
- WO-A-2007/142155
- DE-A1- 4 421 303

## Beschreibung

Die vorliegende Erfindung betrifft eine Probenbehandlungsanordnung gemäß dem Oberbegriff von Anspruch 1.

Eine derartige Probenbehandlungsanordnung ist beispielsweise bekannt aus der EP 1 745 851 A. Zum Stand der Technik sei ferner auf die DE 44 21 303 A und die EP 1 614 468 A verwiesen.

Die Probenbehandlungsanordnung umfasst wenigstens einen mit einem Fluid, dessen Druck zur Aufnahme oder Abgabe einer zu dosierenden Flüssigkeit veränderbar ist, gefüllten Hohlraum, der wenigstens eine erste Öffnung aufweist, durch die die zu dosierende Flüssigkeit aufnehmbar oder abgebbar ist, sowie einen Drucksensor, der derart in Verbindung mit dem Hohlraum steht, dass durch den Drucksensor während eines Flüssigkeitsdosierungsvorgangs der Druck des Fluids in dem Hohlraum erfassbar ist.

Das Fluid in dem Hohlraum kann entweder gasförmig oder flüssig sein. In besonders einfachen Fällen kann es sich hierbei um die zu pipettierende Flüssigkeit selbst handeln. In aller Regel wird man jedoch als Fluid ein Gas, z.B. Luft oder Stickstoff verwenden, welches im Betrieb, z.B. je nach Änderung des Volumens des Hohlraums, seinen Druck ändert und dadurch dafür sorgt, dass ein weiteres Fluid, nämlich die zu dosierende Flüssigkeit, entweder während der Aspirationsphase in den Hohlraum eingebracht wird oder während der Dispensationsphase aus dem Hohlraum ausgeschoben wird.

Bei der Flüssigkeitsdosiervorrichtung handelt es sich bevorzugt um eine Pipettiervorrichtung, bei der durch Eintauchen einer Pipettenspitze mit der darin ausgebildeten ersten Öffnung und Erzeugen eines Unterdrucks in dem Hohlraum durch Vergrößern des mit dem Fluid gefüllten Hohlraums zunächst eine bestimmte Menge einer Flüssigkeit in den Hohlraum eingebracht wird (Aspiration) und dann nach Bewegen der Pipette zu in einem vorbestimmten Zielort durch Verkleinern des mit dem Fluid gefüllten Hohlraums ein Überdruck erzeugt wird, der dafür sorgt, dass eine bestimmte Flüssigkeitsmenge wieder durch die erste Öffnung abgegeben wird (Dispensation). Insbesondere soll die Erfindung auf solche Pipettiervorrichtungen anwendbar sein, bei denen der Flüssigkeitsdosierungsvorgang weitgehend automatisiert, d.h. ohne manuelle Eingriffe durch eine Bedienungsperson abläuft.

Es sind im Stand der Technik zahlreiche Anwendungen bekannt, bei denen während eines mittels einer Pipettiervorrichtung durchgeführten Flüssigkeitsdosierungsvorgangs der Druck in dem Hohlraum (im Folgenden auch als Pipettierraum bezeichnet) erfasst wird und zur Auswertung bestimmter Kenngrößen bzw. zur Erfassung von Irregularitäten herangezogen wird. Als Beispiel seien hier genannt: EP 1 614 468 A1, gemäß der anhand des Drucks des Fluids im Pipettierraum eine Regelung stattfindet, um zu verhindern, dass während der zwischen Aspirationsphase und Dispensationsphase stattfindenden Transportphase Flüssigkeit durch die erste Öffnung tropft, und EP 1 412 759 B1, gemäß der anhand des Druck-Zeit-Profils im Pipettierraum beurteilt wird, ob während des Pipettiervorgangs Unregelmäßigkeiten (z.B. das Verstopfen der Pipette durch Festkörper) aufgetreten sind. Als letztes Beispiel sei noch die EP 1 745 851 genannt, gemäß der anhand des für eine unbekannte Flüssigkeit unter vorbestimmten Prozessgrößen gemessenen Druck-Zeit-Profils aus einer Mehrzahl abgespeicherter Druck-Zeit-Profile für bekannte Flüssigkeiten ein optimaler Satz von Prozessgrößen zum Pipettieren der unbekannten Flüssigkeit abgeleitet werden soll.

Alle diese Anwendungen erfordern es, den Druck in dem mit Fluid gefüllten Hohlraum während des Flüssigkeitsdosierungsvorgangs zu bestimmen und auszuwerten. Dies setzt jedoch voraus, dass Vorrichtungen zur Erfassung dieses Drucks vorhanden und geeignet angeordnet sind. Dies ist insbesondere dann schwierig, wenn eine Mehrzahl von Flüssigkeitsdosiereinheiten, die jeweils zur unabhängigen und separaten Dosierung einer Flüssigkeit vorgesehen sind (beim Pipettieren wird häufig von "Pipettierkanal" gesprochen), an einem gemeinsamen Träger angeordnet werden sollen, wie es gerade im biochemischen Bereich zu Reihenuntersuchungen häufig gewünscht wird.

Aufgabe der vorliegenden Erfindung ist es, eine Probenbehandlungsanordnung anzugeben, bei der eine Erfassung des Drucks in dem mit einem Fluid gefüllten Hohlraum während eines Flüssigkeitsdosierungsvorgangs auf möglichst einfache und platzsparende Weise möglich ist.

Diese Aufgabe wird bei einer Probenbehandlungsanordnung der eingangs genannten Art gelöst durch die Merkmale des kennzeichnenden Teils von Anspruch 1.

Dabei sollen die erste und die zweite Öffnung als "gegenüber liegend angeordnet" gelten, wenn ihre durch den jeweiligen Öffnungsrand definierten Öffnungsflächen je einen Normalenvektor aufweisen mit je einer Normalenvektorenkomponente, die zu der jeweils anderen Öffnung hinweist. Anders ausgedrückt liegen die erste und die zweite Öffnung einander bezüglich der Hohlraumlängsachse dann gegenüber, wenn ihre Normalenvektoren jeweils eine nicht-verschwindende, endlich große Komponente in Längsachsenrichtung aufweisen.

Der Hohlraum kann bei der erfindungsgemäßen Anordnung klein gehalten werden. Der Hohlraum kann insbesondere länglich und schlank gehalten werden, was eine dichte Anordnung von gesonderten Hohlräumen in Matrixanordnungen mit oder trotz gesonderter Druckerfassung in mehreren, vorzugsweise allen Hohlräumen gestattet. Vergrößerungen des Hohlraums, etwa in der Art von Ausstülpungen, insbesondere seitlichen wie im Stand der Technik, zur Aufnahme des Drucksensors sind im Wesentlichen nicht erforderlich. Der Hohlraum wird in der Regel länglich und derart ausgebildet sein, dass seine Größe zur Erzeugung eines Unterdrucks oder Überdrucks in Richtung seiner Längsachse veränderbar ist. Diese Ausbildung spart Platz und gestattet es, nebeneinander viele voneinander separate Hohlräume anzuordnen. Damit können eine Mehrzahl von voneinander unabhängigen Flüssigkeitsdosiereinheiten an einer gemeinsamen Probenbehandlungsanordnung vorgesehen werden. Durch die erfindungsgemäße Anordnung des Drucksensors der ersten Öffnung im Wesentlichen bezogen auf die Längsachse des Hohlraums der ersten Öffnung gegenüberliegend, wird bezogen auf eine Fläche einer Trägervorrichtung der Probenbehandlungsanordnung, an der Flüssigkeitsdosiereinheiten gehalten sind, durch den zusätzlichen Drucksensor bzw. die zusätzlichen Drucksensoren nicht oder nur unwesentlich mehr Platz beansprucht als bei gleichen Flüssigkeitsdosiereinheiten ohne Drucksensoren.

Der Drucksensor ist außerdem von der ersten Öffnung, und damit von einer in der Regel zur Einwegbenutzung vorgesehenen und von der Probenbehandlungsvorrichtung abnehmbaren Pipettenspitze verhältnismäßig weit entfernt, insbesondere in axialer Richtung, also bezogen auf die Längsachse des Hohlraums. Auch dies hilft, dass die Funktion des Drucksensors von dem Anbringen/Abnehmen der Pipettenspitze unabhängig ist. Außerdem steht somit für die Anordnung von für den Drucksensor erforderlicher Steuer- oder/und Auswerteelektronik ausreichend Raum zur Verfügung, weil die Mechanik zum Anbringen oder Abnehmen der Pipettenspitze verhältnismäßig weit entfernt angreift.

Da der Drucksensor selbst eine in dem Hohlraum ausgebildete zweite Öffnung fluiddicht verschließt, vorzugsweise in dieser zweiten Öffnung sitzt, also angeordnet ist, steht für den Sensor eine große Messfläche zur Verfügung. Die Größe der zweiten Öffnung braucht daher nicht allzu groß zu sein, was Platz für den Drucksensor spart und außerdem hilft, Totvolumina zu vermeiden, die gegebenenfalls das Messergebnis des Drucksensors verfälschen können.

Eine besonders Platz sparende Probenbehandlungsanordnung wird vorteilhafterweise dadurch erhalten, dass die zweite Öffnung von der Längsachse des Hohlraums durchsetzt ist, wobei vorzugsweise die Längsachse mit einer von einem die zweite Öffnung begrenzenden Rand definierten Öffnungsfläche einen Winkel, vorzugsweise rechten Winkel einschließt.

Aus demselben Grund ist es bevorzugt, wenn die erste Öffnung von der Längsachse des Hohlraums durchsetzt ist, wobei vorzugsweise die Längsachse mit einer von einem die erste Öffnung begrenzenden Rand definierten Öffnungsfläche einen Winkel, vorzugsweise einen rechten Winkel einschließt.

Es ist bei der erfindungsgemäßen Anordnung des Drucksensors ohne Weiteres möglich, eine Mehrzahl von Hohlräumen mit je einer entsprechenden ersten Öffnung vorzusehen, wobei jedem der Hohlräume ein mit diesem in Verbindung stehender Drucksensor zugeordnet ist. Es kann sogar jeder der Hohlräume eine zweite Öffnung aufweisen, die durch einen dem Hohlraum zugeordneten Drucksensor verschlossen ist. Jede der einzelnen Flüssigkeitsdosiereinheiten verfügt damit über einen eigenen nur ihr zugeordneten Drucksensor, so dass die Erfassung des Drucks in dem Hohlraum schnell und ungestört von den anderen Flüssigkeitsdosiereinheiten erfolgen kann.

Vorzugsweise sind bei Mehrfach-Probenbehandlungsanordnungen der genannten Art die Hohlräume nebeneinander in zueinander orthogonalen Reihen und Spalten angeordnet, wobei die ersten Öffnungen zweier entlang einer Reihe oder/und Spalte benachbarter Hohlräume jeweils denselben Abstand voneinander aufweisen. Solche Anordnungen können beispielsweise 96 einzelne Flüssigkeitsdosiereinheiten in einer Anordnung mit 8 Flüssigkeitsdosiereinheiten in einer Reihe nebeneinander und 12 dieser Reihen hintereinander umfassen. Alternativ sind Anordnungen mit 384 einzelnen Flüssigkeitsdosiereinheiten in einer Anordnung mit 12 Flüssigkeitsdosiereinheiten in einer Reihe nebeneinander und 32 dieser Reihen hintereinander oder Anordnungen mit 1536 einzelnen Flüssigkeitsdosiereinheiten in einer Anordnung mit 32 Flüssigkeitsdosiereinheiten in einer Reihe nebeneinander und 48 dieser Reihen hintereinander möglich.

In einer vorteilhaften Ausgestaltung ist der Hohlraum wenigstens zum Teil gebildet durch ein Zylinderelement und ein in das Zylinderelement von dessen einem Stirnende her eingesetztes und relativ zu dem Zylinderelement bewegliches Kolbenelement, wobei die erste Öffnung an dem dem einen Stirnende gegenüber liegenden anderen Stirnende des Zylinderelementes ausgebildet ist. Auf diese Weise ist eine Flüssigkeitsdosiereinheit gebildet, welche zur Aufnahme oder/und Abgabe der zu dosierenden Flüssigkeit in der Art einer Kolben-Zylinderanordnung arbeitet. Solche Kolben-Zylinderanordnungen besitzen eine ausgeprägte längliche Gestalt mit einer in Richtung der Längsachse des Zylinderelementes verlaufenden Längsachse, wobei das Kolbenelement ebenfalls in Richtung der Längsachse relativ zu dem Zylinderelement beweglich ist. Die Öffnung zur Aufnahme bzw. Abgabe der zu dosierenden Flüssigkeit ist an dem anderen Ende des Zylinderelements, d.h. an dem von dem Kolbenelement abgewandten Boden des Zylinderelementes und damit an einer der Stirnseiten der Kolben-Zylinderanordnung ausgebildet. Die Zylinder-Längsachse, die Kolben-Zylinderanordnungs-Längsachse und die Hohlraum-Längsachse fallen in diesem Fall vorzugsweise zusammen. Vorzugsweise befindet sich gemäß der vorliegenden Erfindung bei einer solchen Anordnung der Drucksensor an einer der ersten Öffnung bezüglich der Längsachse der Kolben-Zylinderanordnung gegenüber liegenden Stirnseite.

Das Kolbenelement ist vorzugsweise als Hohlkolben ausgebildet mit einem das Kolbenelement durchsetzenden Durchgang, der an dem dem anderen Stirnende des Zylinderelementes zugewandten einen Stirnende des Kolbenelementes der ersten Öffnung gegenüber liegend in einen ersten Teilhohlraum mündet. Der Durchgang kann dann einerseits an dem von dem anderen Stirnende des Zylinderelementes abgewandten anderen Stirnende des Kolbenelementes der zweiten Öffnung gegenüber liegend in einen zweiten Teilhohlraum münden. Es kann alternativ auch vorgesehen sein, dass das von dem anderen Stirnende des Zylinderelementes abgewandte andere Stirnende des Durchgangs die zweite Öffnung ausbildet.

Die zweite Öffnung kann sich beispielsweise an einem der Stirnenden des Kolbenelementes befinden, wobei gegebenenfalls der Drucksensor wenigstens teilweise in eine Vertiefung an dem Stirnende des Kolbenelementes eingesetzt sein kann. Sowohl das eine, der ersten Öffnung zugewandte Stirnende als auch bevorzugt das am anderen Ende des Kolbenelements befindliche Stirnende kommen hierfür in Frage.

Der Durchgang verläuft vorzugsweise konzentrisch zur Längsachse des Kolbenelementes, so dass das Kolbenelement in einfacher Weise als Röhre ausgebildet sein kann, wobei ein geschlossener, vorzugsweise zylinderförmiger Mantel den Durchgang umschließt. Hier sei erneut darauf hingewiesen, dass die Längsachse des Kolbenelements vorzugsweise mit der Längsachse des Hohlraums oder/und mit der Längsachse des Zylinders oder/und mit der Längsachse der Kolben-Zylinderanordnung zusammenfällt.

In einer bevorzugten Ausführungsform ist das Kolbenelement an einer relativ zu dem Zylinderelement bewegbaren Trägervorrichtung befestigt, wobei die Trägervorrichtung eine erste Trägerplatte umfasst, an der das Kolbenelement mit im Wesentlichen orthogonal zur Ebene der ersten Trägerplatte stehender Längsachse angebracht ist. Vorzugsweise ist das Kolbenelement, gegebenenfalls über ein Aufnahmeelement, in eine entsprechende Aussparung oder Vertiefung an der Trägerplatte eingesetzt.

Die Trägervorrichtung kann darüber hinaus noch eine zweite Trägerplatte umfassen, die im Wesentlichen parallel zu der ersten Trägerplatte angeordnet ist und mit dieser unter Bildung eines Zwischenraumes verbunden ist, wobei der Drucksensor wenigstens teilweise in dem zwischen der ersten Trägerplatte und der zweiten Trägerplatte ausgebildeten Zwischenraum untergebracht ist. Diese Ausführungsform schafft im Zwischenraum zwischen den Trägerplatten besonders viel Platz, der neben der Anordnung des Drucksensors auch zur Unterbringung einer für den Betrieb des Drucksensors erforderlichen Steuereinheit und gegebenenfalls Auswerteeinheit genutzt werden kann. Weil sowohl die Steuereinheit als auch die Auswerteeinheit, üblicherweise ein Mikroprozessor oder Mikrokontroller nebst entsprechenden Peripherieeinheiten, in unmittelbarer Nähe zum Drucksensor angeordnet sein kann, lässt sich hierbei eine besonders schnelle Datenübertragung realisieren.

Die beschriebene Anordnung ermöglicht es beispielsweise, jedem Drucksensor eine eigene Steuereinheit oder/und Auswerteeinheit zuzuordnen, was eine schnelle und störungsfreie Erfassung des Drucks in jedem einer jeweiligen Flüssigkeitsdosiereinheit zugeordneten Hohlraum ermöglicht. Sofern es in manchen Fällen sinnvoll erscheinen mag. einer Gruppe von Flüssigkeitsdosiereinheiten eine gemeinsame Steuereinheit oder/und Auswerteeinheit zuzuordnen, ist es auch möglich, eine Mehrzahl von Drucksensoren zu einer Gruppe zusammenzufassen, der jeweils eine eigene Steuereinheit oder/und Auswerteeinheit zugeordnet ist.

Der Drucksensor kann zum Beispiel eine die zweite Öffnung überdeckende Membran umfassen. Mittels einer Membran ist beispielsweise problemlos ein Differenzdrucksensor realisierbar, da der Spannungszustand einer elastisch gespannten Membran von der Druckdifferenz zwischen den beiden Flachseiten der Membran abhängt.

Die Probenbehandlungsanordnung gemäß der Erfindung ist insbesondere für Flüssigkeitsdosiervorrichtungen, insbesondere Pipettiervorrichtungen, anwendbar und beansprucht daher Schutz auch für solche Flüssigkeitsdosiervorrichtungen, bzw. Pipettiervorrichtungen. Insbesondere soll die Probenbehandlungsanordnung gemäß der Erfindung bei automatisierten Pipettiervorrichtungen Anwendung finden, bei denen in einem jeweiligen Durchlauf ohne einen Eingriff einer Bedienungsperson zahlreiche Pipettiervorgänge zeitlich parallel zueinander ablaufen und nach Beendigung eines Durchlaufes jeweils automatisch ein neuer Durchlauf durchgeführt wird.

Die vorliegende Erfindung wird im folgenden anhand der beiliegenden Zeichnungen näher erläutert werden. Es stellt dar:
- Fig. 1:: eine schematische Darstellung einer als Pipettiervorrichtung ausgebildeten Flüssigkeitsdosiervorrichtung des Standes der Technik, wie sie aus der EP 1 614 468 A1 bekannt ist,
- Fig. 2:: in schematischer und stark vereinfachter Ansicht die Anordnung von mehreren Pipettiereinheiten (Pipettierkanälen) in einer MehrfachProbenbehandlungsanordnung für eine Pipettiervorrichtung,
- Fig. 3:: in einer Schnittansicht einen Ausschnitt einer Probenbehandlungsanordnung gemäß einer Ausführungsform der vorliegenden Erfindung,
- Fig. 4:: eine vergrößerte Teilansicht der ersten und der zweiten Öffnung der Probenbehandlungsanordnung von Figur 3, und
- Fig. 5:: eine perspektivische Darstellung der Öffnungsflächen der ersten Öffnung und der zweiten Öffnung der Probenbehandlungsanordnung der Figuren 3 und 4.

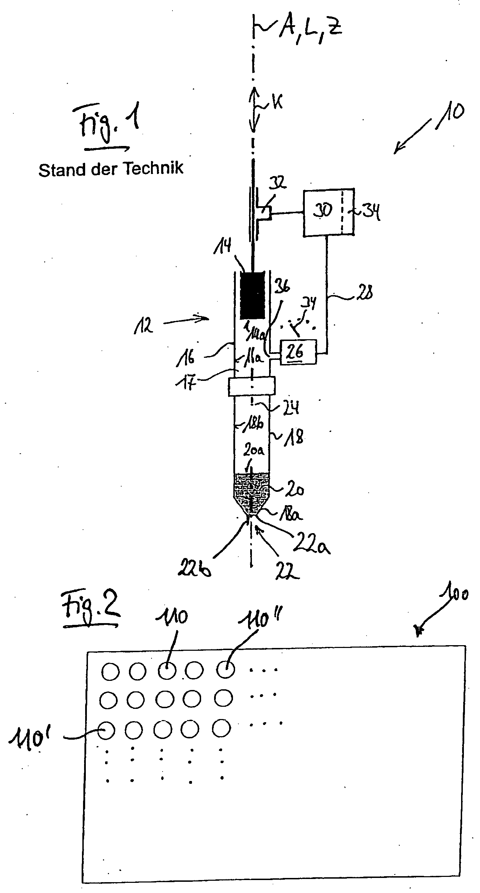

In Figur 1 ist eine als Pipettiereinheit ausgebildete Flüssigkeitsdosiervorrichtung des Standes der Technik allgemein mit 10 bezeichnet. Die Pipettiereinheit 10 umfasst ein Kolben-Zylinder-System 12 mit einem Kolben 14, welcher in einem Zylinder 16 in Richtung des Doppelpfeils K beweglich geführt ist.

Am Zylinder 16 ist eine auswechselbare Pipettierspitze 18 aufgenommen, in welcher eine Flüssigkeit 20 vorhanden ist. Die Pipettierspitze 18 umschließt zusammen mit dem Zylinder 16 und dem Kolben 14 einen Hohlraum 17, welcher (in dem in Figur 1 gezeigten Zustand bei erfolgter Aspiration) zumindest teilweise mit der Flüssigkeit 20 gefüllt ist. Der Zylinder 16, der Kolben 14 und die Pipettierspitze 18 bilden daher ein die Flüssigkeit 20 aufnehmendes Gefäß.

Das Kolben-Zylinder-System 12 erstreckt sich längs einer System-Längsachse L, die mit einer Längsachse Z zusammenfällt, längs der sich der Zylinder 16 erstreckt. Der vom Zylinder 16 radial begrenzte Hohlraum 17 erstreckt sich daher längs einer mit den zuvor genannten Längsachsen L und Z zusammenfallenden Längsachse A. Längs dieser Längsachse(n) ist der Kolben 14 beweglich.

An dem zylinderfernen Längsende 18a weist die Pipettierspitze 18 eine Öffnung 22 auf, durch welche hindurch die Flüssigkeit 20 in die Pipettierspitze 20 aufgenommen wurde und aus dieser wieder abgegeben werden kann. Die Öffnung 22 bildet eine erste Öffnung im Sinne der vorliegenden Erfindung.

Die Öffnung 22 ist durch einen kreisförmigen Rand 22a berandet, welcher eine zur Hohlraum-Längsachse A orthogonale, kreisförmige Öffnungsfläche 22b definiert.

Der Kolben 14 liegt im Wesentlichen gasdicht an der Innenwand 16a des Zylinders 16 an. Die zur Pipettierspitze 18 hin weisende Kolbenfläche 14a bildet eine Hohlraum- bzw. Gefäßbegrenzungswand.

Zwischen der Flüssigkeitsoberfläche 20, der Kolbenfläche 14a, der Zylinderinnenwand 16a und der Innenwand 18b der Pipettierspitze ist ein Gas 24, etwa Luft, eingeschlossen. Statt Luft kann auch ein beliebiges anderes Gas verwendet werden, etwa Stickstoff oder ein Edelgas, falls Reaktionen mit der aufzunehmenden Flüssigkeit 20 auf jeden Fall vermieden werden sollen.

Die Flüssigkeit 20 wurde in an sich bekannter Weise durch Eintauchen der Öffnung 22 in einen Flüssigkeitsvorrat und Bewegen des Kolbens 14 bei eingetauchter Öffnung derart, dass sich der Hohlraum 17 vergrößert und damit das Volumen des eingeschlossenen Gases 24 vergrößert wird, durch die Öffnung 22 in die Pipettierspitze 18 eingesaugt. Die Pipettierspitze 18 von Figur 1 hat die Flüssigkeitsaufnahme (Aspiration) bereits abgeschlossen und ist nicht mehr in den Flüssigkeitsvorrat getaucht.

Ein Drucksensor 26 zur Erfassung des Gasdrucks des eingeschlossenen Gases 24 steht über eine zweite Öffnung 36 in der Zylinderinnenwand 16a mit dem Innenraum des Gefäßes in Verbindung. Da die Pipettierspitze 18 regelmäßig ausgetauscht wird, ist der Drucksensor 26 im Bereich des im Gegensatz zur Pipettierspitze 18 nicht wechselbaren Zylinders 16 vorgesehen.

Der Drucksensor 26 erfasst den Druck des Gases 24 und liefert ein den Gasdruck repräsentierendes Signal über die Leitung 28 an eine Steuer/Regeleinrichtung 30, welche u.a. dazu ausgebildet ist, einen Antrieb 32 zur Verlagerung des Kolbens 14 in Richtung des Doppelpfeils K in Abhängigkeit eines von dem Drucksensor 26 gelieferten Signals zu betreiben.

Der Drucksensor 26 kann dabei einen Absolutwert des Drucks des Gases 24 oder kann einen Relativwert, etwa bezogen auf den Umgebungsdruck, an die Steuer/Regeleinrichtung 30 liefern. Der vom Drucksensor 26 erfasste und an die Steuer/Regeleinrichtung 30 gelieferte Druckwert ist durch einen Zeiger 34 angedeutet.

Die zweite Öffnung 36 ist seitlich entfernt von der Längsachse A des Hohlraums 17 und parallel zu dieser orientiert, so dass sich erste Öffnung 22 und zweite Öffnung 36 nicht bezogen auf die Längsachse A gegenüberliegen.

Die Steuer/Regeleinrichtung 30 kann noch weitere Funktionen haben. Sie kann etwa eine Überwachung darauf durchführen, ob während des Pipettiervorgangs immer plausible Druckwerte auftreten, und gegebenenfalls Pipettiervorgänge, die irregulär verlaufen, ausschließen. Dies ist z.B. in der EP 1 412 759 B1 beschrieben, auf die in diesem Zusammenhang ausdrücklich verwiesen wird.

Häufig kommt es vor, dass eine Pipettiereinheit, wie sie in Figur 1 schematisch dargestellt ist, nicht als Einzeleinheit zum in der Regel manuellen Dosieren einer Flüssigkeit Verwendung findet. Gerade in jüngerer Zeit trat mit der Entwicklung von leistungsfähigen automatisierten Pipettiervorrichtungen gerade im Zusammenhang mit zahlreichen Anwendungen, die eine massenhafte Untersuchung bzw. Behandlung von Proben erfordern, immer mehr die Anforderung in den Vordergrund, nicht mehr nur einzelne Dosierungsvorgänge nacheinander ausführen zu können, sondern es sollten möglichst in einem Arbeitsgang viele Dosierungsvorgänge gleichzeitig abgewickelt werden können. Zu diesem Zweck wurden für automatisierte Pipettiervorrichtungen Mehrfach-Probenbehandlungsanordnungen entwickelt, bei denen an einem einzelnen Manipulationsglied (z.B. am Arm eines Pipettierroboters) eine Probenbehandlungsanordnung bzw. ein Probenbehandlungskopf befestigt ist, die über eine Mehrzahl von Einzelpipettiereinheiten verfügt, welche jeweils einen Aufbau nach der in Figur 1 gezeigten schematischen Anordnung aufweisen können.

Bei Mehrfach-Probenbehandlungsanordnungen sind die einzelnen Pipettiereinheiten in der Regel in Form eines rechteckigen Feldes in Reihen und Spalten angeordnet, wobei die einzelnen benachbarten Pipettiereinheiten jeweils einen gleichen Abstand zueinander haben. Die Abstände zwischen den in einer Reihe nebeneinander liegenden Pipettiereinheiten, insbesondere zwischen deren ersten Öffnungen zur Aufnahme bzw. zur Abgabe von Flüssigkeit, und die entsprechenden Abstände zwischen den in einer Spalte nebeneinander liegenden Pipettiereinheiten sind jeweils gleich groß. In der Regel ist der reihenweise gemessene Abstand gleich groß wie der spaltenweise gemessene Abstand. Eine solche Mehrfach-Probenbehandlungsanordnung bzw. Mehrfach-Pippetierkopf ist in vereinfachter und schematischer Weise in Figur 2 in einer Ansicht auf ihre Unterseite angedeutet. Die Probenbehandlungsanordnung 100 ist in Figur 2 schematisch als Rechteck zu sehen. Die einzelnen Pipettiereinheiten 110, 110', 110" (die in Figur 2 mit analogen Bezugszeichen zur Pipettiereinheit 10 gemäß Figur 1 bezeichnet sind und von denen überdies lediglich einige ausgewählte beispielhaft bezeichnet sind) sind durch Kreise angedeutet. Man beachte, dass in Fig. 2 nicht alle Pipettiereinheiten eingezeichnet sind, sondern sich diese sowohl nach rechts als auch nach unten noch fortsetzen. So können in solchen Mehrfach-Probenbehandlungsanordnungen bzw. Mehrfach-Pipettierköpfen gemäß Figur 2 z.B. 8 Reihen mit je 12 Pipettiereinheiten und damit insgesamt 96 Pipettiereinheiten vorgesehen sein, oder aber es können 12 oder 16 Reihen mit je 32 bzw. 24 Pipettiereinheiten (insgesamt 384 Pipettiereinheiten) oder aber sogar 32 Reihen mit je 48 Pipettiereinheiten (insgesamt 1536 Pipettiereinheiten) vorgesehen sein und damit entsprechend viele Flüssigkeitsdosierungsvorgänge gleichzeitig durchgeführt werden.

Damit stellt sich jedoch die Anforderung, wie bei einer derart hohen Zahl von nebeneinander anzuordnenden Pipettiereinheiten noch eine Überwachung des Drucks im Pipettierraum, wie es gemäß den oben genannten Anwendungen eigentlich erwünscht wäre, erfasst werden kann. Hierzu ist zu berücksichtigen, dass diese Anwendungen sämtlich die Erfassung des Drucks in der jeweiligen Pipettiereinheit unabhängig und separat von den anderen Pipettiereinheiten erforderlich machen. Es ist somit erforderlich, eine sehr große Anzahl von Drucksensoren nebst zugehöriger Elektronik zur Auswertung und Ansteuerung derselben auf engstem Raum nebeneinander anzuordnen.

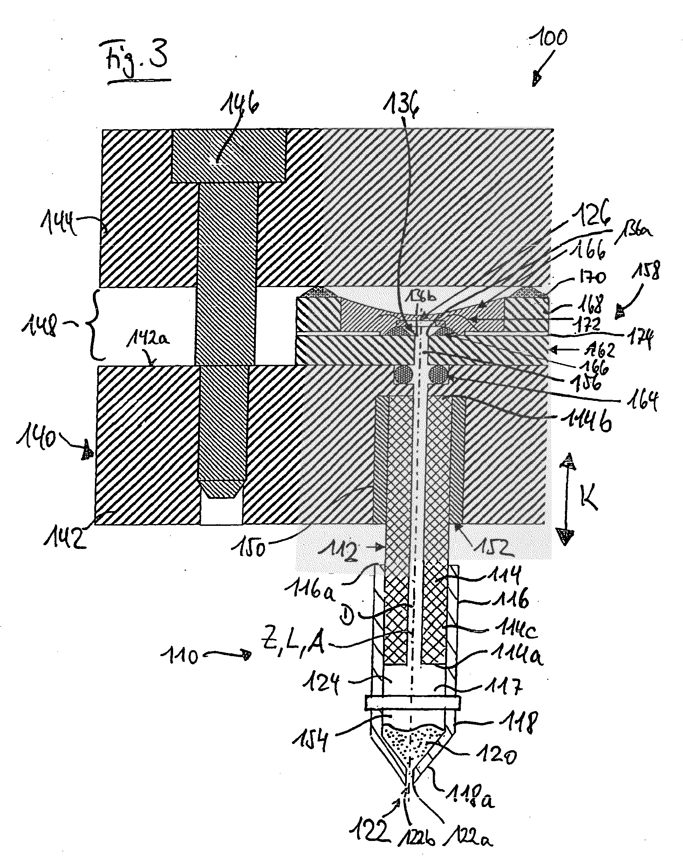

Figur 3 zeigt in einer Querschnittsansicht einen Ausschnitt einer Probenbehandlungsanordnung (bzw. eines Pipettierkopfes) 100 gemäß einer Ausführungsform der vorliegenden Erfindung zum Einbau in eine automatisiert arbeitende Pipettiervorrichtung. Der in Figur 3 gezeigte Ausschnitt zeigt dabei eine aus einer Mehrzahl von Pipettiereinheiten 110, die in der Probenbehandlungsanordnung 100 vorgesehen sind. Die Pipettiereinheit 110 kann dabei hinsichtlich ihrer funktionalen Komponenten zur Aufnahme und Abgabe von Flüssigkeiten analog zu der bereits in Figur 1 schematisch gezeigten Pipettiereinheit 10 aufgebaut sein. Im Folgenden werden daher solche Komponenten, die bereits in Figur 1 gezeigten Komponenten entsprechen, mit denselben Bezugszeichen, jeweils vermehrt um 100, bezeichnet und lediglich insoweit näher erläutert, als sie sich von dem Beispiel des Standes gemäß Figur 1 unterscheiden, auf die ansonsten verwiesen sei.

Der wesentliche Gesichtspunkt liegt bei der Probenbehandlungsanordnung 100 bzw. speziell der Pipettiereinheit 110 in der Anordnung des Kolben-Zylindersystems 112 und des Drucksensors 126 sowie in der Anbringung des Kolben/Zylindersystems 112 an der unteren Trägerplatte 142 einer Trägervorrichtung 140 derart, dass das Zylinderelement (gebildet durch den Pipettierzylinder 116 mit daran angebrachter Pipettierspitze 118) relativ zu der Trägervorrichtung 140 bewegbar ist (siehe den Doppelpfeil K). Die Trägervorrichtung 140 umfasst eine untere Trägerplatte 142 und eine obere Trägerplatte 144, die durch jeweilige Schraubbolzen 146 zusammengehalten sind. Zwischen der unteren Trägerplatte 142 und der oberen Trägerplatte 144 ist ein Zwischenraum 148 freigelassen.

Im Folgenden soll diese Anordnung anhand des in Figur 3 gezeigten Ausschnitts näher beschrieben werden, wobei es sich versteht, dass an der Trägervorrichtung 140 eine Mehrzahl von Pipettiereinheiten 110 in der in Figur 3 gezeigten Weise angeordnet sind.

In der Unterseite der unteren Trägerplatte 142 befindet sich eine Ausnehmung 150, in die eine Hülse 152 eingesetzt ist. In die Hülse 152 ist wiederum das Kolbenelement 114 des Kolben-Zylindersystems 112 eingesetzt. Das Kolbenelement 114 ist daher an der unteren Trägerplatte 142 fest und unverrückbar gehalten.

Wie aus Figur 3 ersichtlich ist, ist das Kolbenelement 114 als Hohlkolben ausgebildet, mit einem Mantel 114c, der einen konzentrisch zur Längsachse des Kolbenelements 114 und zur Längsachse L des Kolben-Zylindersystems 112 verlaufenden Durchgang D umschließt. Der Hohlkolben 114 ist im Wesentlichen fluiddicht in ein Zylinderelement eingesetzt, das gebildet ist aus einem Zylinderkolben 116 mit an dessen vorderem Ende aufgesetzter Pipettenspitze 118. Der gemeinsam mit der Trägervorrichtung 140 bewegbare Hohlkolben 114 verschiebt sich bei Bewegung der Trägervorrichtung 140 (siehe Doppelpfeil K) entlang der Innenwand des Zylinderelements 116, 118, wobei seine Außenwand an dieser Innenwand abgleitet.

Der Durchgang D des Hohlkolbens 114 mündet auf seiner einen Stirnseite, die der Pipettenspitze 118 mit der darin ausgebildeten ersten Öffnung 122, durch die die zu pipettierende Flüssigkeit 120 aufgenommen bzw. abgegeben wird, zugewandt ist, in einen ersten Teilhohlraum 154. Bei der Anordnung gemäß Figur 3 liegt die Mündung des Durchgangs D in den Teilhohlraum 154 der ersten Öffnung 122 bezogen auf die Längsachse A des Kolben-Zylindersystems 112 gegenüber.

An seiner anderen Stirnseite mündet der Durchgang D in einen zweiten Teilhohlraum 156. Der zweite Teilhohlraum 156 entsteht dadurch, dass in der unteren Trägerplatte 142 entlang der Zentralachse der Aussparung 150 ein Kanal ausgebildet ist, der einen Durchgang zur Oberseite 142a der unteren Trägerplatte 142 schafft, und an der Oberseite 142a der unteren Trägerplatte 142 direkt über der Mündung des Kanals eine Druckmesseinheit 160 angebracht ist. Die Druckmesseinheit 160 ist damit in dem zwischen den beiden Trägerplatten 142, 144 gebildeten Zwischenraum 148 untergebracht.

Die Druckmesseinheit 160 umfasst ein direkt oberhalb der Mündung des die der Trägerplatte 142 durchbrechenden Kanals angeordnetes Substrat 162 sowie den oberhalb der Substrats angeordneten eigentlichen Drucksensor 126. Das Substrat 162 weist eine Durchbrechung auf, die konzentrisch mit dem Kanal der Trägerplatte 142 angeordnet ist. Der Drucksensor 126 umfasst eine Membran, die die Durchbrechung des Substrats 162 an dessen Oberseite überspannt. Der Drucksensor 126 verschließt damit eine an der Oberseite des Substrats 162 gebildete zweite Öffnung 136.

Die Längsachse A eines aus den Teilhohlräumen 154 und 156 gebildeten Hohlraums fällt mit der Längsachse L des Kolben-Zylinder-Systems 112 zusammen und durchsetzt die Öffnungsfläche 122b der ersten Öffnung 122 sowie eine ebenfalls kreisförmige Öffnungsfläche 136b, welche durch einen kreisförmigen Rand 136a der zweiten Öffnung 136 definiert ist.

Das Substrat 162 selbst ist gegenüber der Trägerplatte 142 durch eine O-Ringdichtung 164 fluiddicht abgedichtet. Der Drucksensor 126 ist mittels einer ringförmigen Klebstofflage 166 mit dem Substrat 162 fluiddicht verbunden. Er wird über eine Drucksensorabdeckung 166 und eine Ringplatte 168, die mittels einer weiteren Klebstofflage 170 an der Unterseite der oberen Trägerplatte 144 anliegt, durch Anziehen der Schraubbolzen 146 derart gegen das Substrat gedrückt, dass sowohl zwischen dem Drucksensor 126 und dem Substrat 162 als auch zwischen dem Substrat 162 und der Trägerplatte 142 ein fluiddichter Kontakt entsteht. Damit kann das Fluid 124 nicht aus dem zweiten Teilhohlraum 156 austreten.

Aus Figur 3 ist zudem ersichtlich, dass die zweite Öffnung 136, welche von dem Drucksensor 126 verschlossen ist, bezogen auf die Längsachse des Kolben-Zylindersystems 112 der ersten Öffnung 122 gegenüberliegt.

Zu erwähnen ist noch, dass die von dem Drucksensor 126 gelieferten Signale über eine Drahtverbindung 172 und eine Leiterplatte 174 zu einer in der Figur nicht gezeigten elektronischen Steuereinheit und elektronischen Verstärkereinheit/Auswerteeinheit übertragen werden. Diese elektronischen Einheiten können ebenfalls in dem Zwischenraum 148 oder gegebenenfalls an der Oberseite der oberen Trägerplatte 144 vorgesehen sein, so dass sich ein kurzer Übertragungsweg für die elektrischen Signale ergibt. Dies führt zum Einen zu verbesserter Qualität der übertragenen Signale und ermöglicht zum Anderen eine schnelle Ansteuerung und Auswertung der Signale durch entsprechende Mikroprozessor- oder Mikrokontrollerschaltungen.

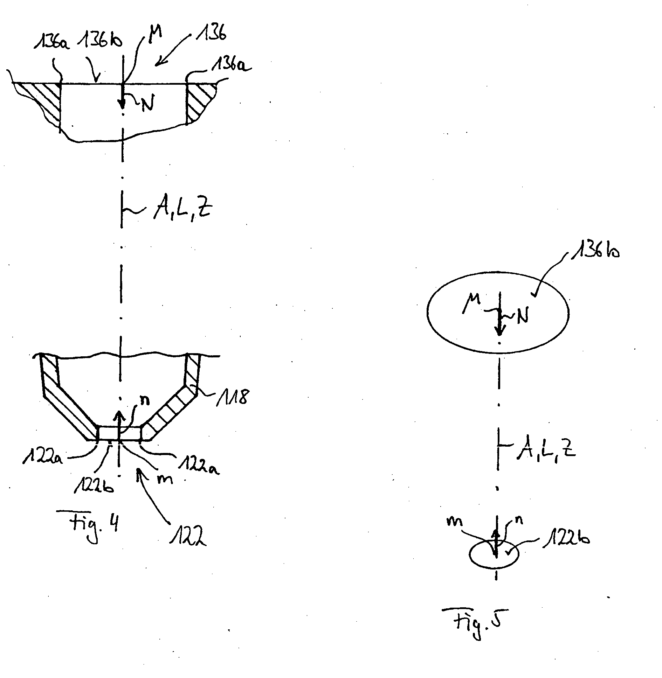

In Figur 4 ist der Bereich der ersten Öffnung 122 an der Pipettierspitze 118 und der Bereich der zweiten Öffnung 136 vergrößert dargestellt, um noch einmal zu verdeutlichen, wie beide Öffnungen in dem gezeigten Beispiel durch einen kreisförmigen Rand 122a für die erste Öffnung 122 und 136a für die zweite Öffnung 136 berandet sind, welche Ränder jeweils Öffnungsflächen 122b und 136b definieren.

Die Öffnungsflächen 122b und 136b sind im dargestellten Beispiel ebene kreisförmige parallele Flächen unterschiedlichen Durchmessers. Ihre Normalenvektoren N bzw. n weisen aufeinander zu und verlaufen längs der Richtung der Längsachse A des aus den Teilhohlräumen 154 und 156 gebildeten Hohlraums. Die Längsachse A des Hohlraums ist daher orthogonal zu den Öffnungsflächen 136b bzw. 122b.

In Figur 5 ist die Orientierung der Öffnungsflächen 122b und 136b relativ zueinander und bezüglich der Längsachse A des Hohlraums perspektivisch dargestellt. Die Längsachse A durchsetzt die Öffnungsflächen 122b und 136b in ihren Mittelpunkten M bzw. m.

## Patentansprüche

1. Probenbehandlungsanordnung (100) für eine Flüssigkeitsdosiervorrichtung, umfassend
wenigstens einen mit einem Fluid (124), dessen Druck zur Aufnahme oder Abgabe einer zu dosierenden Flüssigkeit (120) veränderbar ist, gefüllten Hohlraum (117), der wenigstens eine erste Öffnung (122) aufweist, durch die die zu dosierende Flüssigkeit (120) aufnehmbar oder abgebbar ist, und welcher Hohlraum (117) sich längs einer Längsachse (A) erstreckt, wobei die Größe des Hohlraums (117) zur Erzeugung eines Unterdrucks oder Überdrucks in Richtung seiner Längsachse (A) veränderbar ist,
einen Drucksensor (126), der derart in Verbindung mit dem Hohlraum (117) steht, dass durch den Drucksensor (126) während eines Flüssigkeitsdosierungsvorgangs der Druck des Fluids (124) in dem Hohlraum (117) erfassbar ist,
wobei der Drucksensor (126) eine von der ersten Öffnung (122) verschiedene zweite Öffnung (136) des Hohlraums (117) fluiddicht verschließt,
**dadurch gekennzeichnet, dass** die zweite Öffnung (136) in dem Hohlraum (117) der ersten Öffnung (122) im Wesentlichen bezogen auf die Längsachse (A) des Hohlraums (117) gegenüber liegend angeordnet ist, wobei genauer sowohl die erste (122) als auch die zweite Öffnung (136) durch Öffnungsränder (122a, 136a) berandet sind, welche jeweils eine Öffnungsfläche (122b, 136b) definieren, wobei jede Öffnungsfläche (122b, 136b) jeweils einen Normalenvektor (n, N) aufweist mit einer zu der jeweils anderen Öffnung (122, 136) hinweisenden Normalenvektorenkomponente.

2. Probenbehandlungsanordnung (100) für eine Flüssigkeitsdosiervorrichtung nach Anspruch 1,
**dadurch gekennzeichnet, dass** die Normalenvektoren (n, N) der Öffnungsflächen (122b, 136b) der ersten Öffnung (122) und der zweiten Öffnung (136) eine nicht-verschwindende, endlich grosse Normalenvektorkomponente aufweisen, welche in Richtung der Längsachse (A) des Hohlraums (117) verläuft.

3. Probenbehandlungsanordnung (100) für eine Flüssigkeitsdosiervorrichtung nach einem der vorhergehenden Ansprüche,
**dadurch gekennzeichnet, dass** die Längsachse (A) des Hohlraums (117) die erste Öffnung (122) oder/und die zweite Öffnung (136) durchsetzt, vorzugsweise im Wesentlichen zentral durchsetzt.

4. Probenbehandlungsanordnung (100) für eine Flüssigkeitsdosiervorrichtung nach einem der vorhergehenden Ansprüche,
**dadurch gekennzeichnet, dass** eine Mehrzahl von Hohlräumen (117) mit je einer entsprechenden ersten Öffnung (122) vorgesehen sind, wobei jedem der Hohlräume (117) ein mit diesem in Verbindung stehender Drucksensor (126) zugeordnet ist.

5. Probenbehandlungsanordnung (100) für eine Flüssigkeitsdosiervorrichtung nach Anspruch 4,
**dadurch gekennzeichnet, dass** jeder der Hohlräume (117) eine zweite Öffnung (136) aufweist, die durch einen dem Hohlraum (117) zugeordneten Drucksensor (126) verschlossen ist.

6. Probenbehandlungsanordnung (100) für eine Flüssigkeitsdosiervorrichtung nach einem der vorhergehenden Ansprüche,
**dadurch gekennzeichnet, dass** der Hohlraum (117) wenigstens zum Teil gebildet ist durch ein Zylinderelement (116, 118) und ein in das Zylinderelement (116,118) von dessen einem Stirnende (116a) her eingesetztes und relativ zu dem Zylinderelement (116, 118) bewegliches Kolbenelement (114), wobei die erste Öffnung (122) an dem dem einen Stirnende (116a) gegenüber liegenden anderen Stirnende(118a) des Zylinderelementes (116, 118) ausgebildet ist.

7. Probenbehandlungsanordnung (100) für eine Flüssigkeitsdosiervorrichtung nach Anspruch 6,
**dadurch gekennzeichnet, dass** das Kolbenelement (114) als Hohlkolben ausgebildet ist mit einem das Kolbenelement (114) durchsetzenden Durchgang (D), der an dem dem anderen Stirnende (118a) des Zylinderelementes (116, 118) zugewandten einen Stirnende (114a) des Kolbenelementes (114) der ersten Öffnung (122) gegenüber liegend in einen ersten Teilhohlraum (154)mündet.

8. Probenbehandlungsanordnung (100) für eine Flüssigkeitsdosiervorrichtung nach Anspruch 7,
**dadurch gekennzeichnet, dass** der Durchgang (D) an dem von dem anderen Stirnende (118a) des Zylinderelementes (116, 118) abgewandten anderen Stirnende (114b) des Kolbenelementes (114) der zweiten Öffnung (136) gegenüber liegend in einen zweiten Teilhohlraum (156) mündet.

9. Probenbehandlungsanordnung für eine Flüssigkeitsdosiervorrichtung nach Anspruch 7,
**dadurch gekennzeichnet, dass** das von dem anderen Stirnende des Zylinderelementes abgewandte andere Stirnende des Durchgangs die zweite Öffnung ausbildet.

10. Probenbehandlungsanordnung (100) für eine Flüssigkeitsdosiervorrichtung nach einem der Ansprüche 7 bis 9,
**dadurch gekennzeichnet, dass** der Durchgang (D) konzentrisch zur Längsachse des Kolbenelementes (114) verläuft.

11. Probenbehandlungsanordnung (100) für eine Flüssigkeitsdosiervorrichtung nach einem der Ansprüche 6 bis 10,
**dadurch gekennzeichnet, dass** das Kolbenelement (114) an einer relativ zu dem Zylinderelement (116, 118) bewegbaren Trägervorrichtung (140) befestigt ist, wobei die Trägervorrichtung (140) eine erste Trägerplatte (142) umfasst, an der das Kolbenelement (114) mit im Wesentlichen orthogonal zur Ebene der ersten Trägerplatte (142) stehender Längsachse angebracht ist.

12. Probenbehandlungsanordnung (100) für eine Flüssigkeitsdosiervorrichtung nach Anspruch 11,
**dadurch gekennzeichnet, dass** die Trägervorrichtung (140) eine zweite Trägerplatte (144) umfasst, die im Wesentlichen parallel zu der ersten Trägerplatte (142) angeordnet ist und mit dieser unter Bildung eines Zwischenraumes (148) verbunden ist, wobei der Drucksensor (126) wenigstens teilweise in dem zwischen der ersten Trägerplatte (142) und der zweiten Trägerplatte (144) ausgebildeten Zwischenraum (148) untergebracht ist.

13. Probenbehandlungsanordnung (100) für eine Flüssigkeitsdosiervorrichtung nach einem der vorhergehenden Ansprüche,
**dadurch gekennzeichnet, dass** der Drucksensor (126) eine die zweite Öffnung (136) überdeckende Membran umfasst.

14. Flüssigkeitsdosierungsvorrichtung, insbesondere Pipettiervorrichtung, umfassend eine Probenbehandlungsanordnung (100) nach einem der vorangehenden Ansprüche.

## Claims

1. A sample-processing assembly (100) for a fluid-dosing device,
comprising
at least one cavity (117) filled with a fluid (124) whose pressure is variable to receive or dispense a liquid (120) to be dosed, which cavity has at least one first opening (122) through which the liquid (120) to be dosed can be received or dispensed, which cavity (117) extends along a longitudinal axis (A), the size of the cavity (117) being variable in the direction of its longitudinal axis (A) for creating a negative pressure or an overpressure,
a pressure sensor (126) which is in communication with the cavity (117) in such a way that the pressure of the fluid (124) in the cavity (117) can be detected by the pressure sensor (126) during a fluid-dosing procedure, wherein the pressure sensor (126) closes fluid-tightly a second opening (136) of the cavity (117) different from the first opening (122),
**characterized in that** the second opening (136) is substantially situated opposite the first opening (122) in the cavity (117) in relation to the longitudinal axis (A) of the cavity (117), the first (122) as well as the second opening (136) having more exactly opening borders (122a, 136a), each defining an opening surface (122b, 136b), each opening surface (122b, 136b) comprising a normal vector (n, N) with a normal vector component pointing towards the other opening (122, 136).

2. A sample-processing assembly (100) for a fluid-dosing device according to claim 1,
**characterized in that** the normal vectors (n, N) of the opening surfaces (122b, 136b) of the first opening (122) and the second opening (136) have a non-infinitely small, finitely big normal vector component extending in the direction of the longitudinal axis (A) of the cavity (117).

3. A sample-processing assembly (100) for a fluid-dosing device according to one of the preceding claims,
**characterized in that** the longitudinal axis (A) of the cavity (117) passes, preferably centrally, through the first opening (122) or/and the second opening (136).

4. A sample-processing assembly (100) for a fluid-dosing device according to one of the preceding claims,
**characterized in that** a plurality of cavities (117) with a respective corresponding first opening (122) is provided, wherein each of the cavities (117) is associated with a pressure sensor (126) in communication therewith.

5. A sample-processing assembly (100) for a fluid-dosing device according to claim 4,
**characterized in that** each of the cavities (117) has a second opening (136) which is closed by a pressure sensor (126) associated with the cavity (117).

6. A sample-processing assembly (100) for a fluid-dosing device according to one of the preceding claims,
**characterized in that** the cavity (117) is formed at least partly by a cylinder element (116, 118) and a piston element (114) which is inserted into the cylinder element (116, 118) from its one front end (116a) and which is movable relative to the cylinder element (116, 118), wherein the first opening (122) is formed at the other front end (118a) of the cylinder element (116, 118) situated opposite the front end (116a).

7. A sample-processing assembly (100) for a fluid-dosing device according to claim 6,
**characterized in that** the piston element (114) is in the form of a hollow piston with a passage (D) which passes through the piston element (114) and which, at the front end (114a) of the piston element (114) facing the other front end (118a) of the cylinder element (116, 118), discharges into a first partial cavity (154) situated opposite the first opening (122).

8. A sample-processing assembly (100) for a fluid-dosing device according to claim 7,
**characterized in that** at the other front end (114b) of the piston element (114) remote from the other front end (118a) of the cylinder element (116, 118) the passage (D) discharges into a second partial cavity (156) situated opposite the second opening (136).

9. A sample-processing assembly for a fluid-dosing device according to claim 7,
**characterized in that** the other front end of the passage remote from the other front end of the cylinder element forms the second opening.

10. A sample-processing assembly (100) for a fluid-dosing device according to one of claims 7 to 9,
**characterized in that** the passage (D) extends concentrically to the longitudinal axis of the piston element (114).

11. A sample-processing assembly (100) for a fluid-dosing device according to one of claims 6 to 10,
**characterized in that** the piston element (114) is fastened to a support device (140) which can move relative to the cylinder element (116, 118), wherein the support device (140) comprises a first support plate (142) on which the piston element (114) is mounted with a longitudinal axis disposed substantially orthogonal to the plane of the first support plate (142).

12. A sample-processing assembly (100) for a fluid-dosing device according to claim 11,
**characterized in that** the support device (140) comprises a second support plate (144) which is arranged substantially parallel to the first support plate (142) and is connected to the latter to form an intermediate space (148), wherein the pressure sensor (126) is accommodated at least partly in the intermediate space (148) formed between the first support plate (142) and the second support plate (144).

13. A sample-processing assembly (100) for a fluid-dosing device according to one of the preceding claims,
**characterized in that** the pressure sensor (126) comprises a membrane covering the second opening (136).

14. A fluid-dosing device, in particular a pipetting device, comprising a sample-processing assembly (100) according to any one of the preceding claims.

## Revendications

1. Arrangement de traitement d'échantillons (100) pour un dispositif de dosage de liquides,
comprenant
au moins un espace creux (117) rempli d'un fluide (124) dont la pression d'admission ou de distribution d'un liquide à doser (120) peut être modifiée, qui présente au moins une première ouverture (122) par laquelle le liquide à doser (120) peut être admis ou distribué, et où l'espace creux (117) s'étend le long d'un axe longitudinal (A), la dimension de l'espace creux (117) pouvant être modifié dans la direction de son axe longitudinal (A) pour générer une pression négative ou une surpression,
un capteur de pression (126) qui est relié avec l'espace creux (117) de telle sorte que la pression du liquide (124) dans l'espace creux (117) puisse être captée par le capteur de pression (126) pendant un processus de dosage de liquide,
où le capteur de pression (126) ferme de façon étanche aux liquides une deuxième ouverture (136) de l'espace creux (117) différente de la première ouverture (122),
**caractérisé en ce que**
la deuxième ouverture (136) est arrangé dans l'espace creux (117) face à la première ouverture (122) substantiellement par rapport à l'axe longitudinal (A), où la première (122) ainsi que la deuxième ouverture (136) sont délimitées par des bords d'ouverture (122a, 136a), qui définissent chacun une surface d'ouverture (122b, 136b), chaque surface d'ouverture (122b, 136b) comprenant un vecteur normal (n, N) avec une composante de vecteur normal pointant vers l'autre ouverture (122, 136).

2. Arrangement de traitement d'échantillons (100) pour un dispositif de dosage de liquides selon la revendication 1,
**caractérisé en ce que** les vecteurs normaux (n, N) des surfaces d'ouverture (122b, 136b) de la première ouverture (122) et de la deuxième ouverture (136) comprennent une composante de vecteur normal non infiniment petite, non infiniment grande qui s'étend le long de l'axe longitudinal (A) de l'espace creux (117).

3. Arrangement de traitement d'échantillons (100) pour un dispositif de dosage de liquides selon l'une des revendications précédentes,
**caractérisé en ce que** l'axe longitudinal (A) de l'espace creux (117) passe de préférence essentiellement de manière centrale par la première ouverture (122) et/ou la deuxième ouverture (136).

4. Arrangement de traitement d'échantillons (100) pour un dispositif de dosage de liquides selon l'une des revendications précédentes,
**caractérisé en ce qu**'une pluralité d'espaces creux (117) est dotée respectivement d'une première ouverture correspondante (122), où à chacun des espaces creux (117) est attribué un capteur de pression (126) se trouvant en relation avec celui-ci.

5. Arrangement de traitement d'échantillons (100) pour un dispositif de dosage de liquides selon la revendication 4,
**caractérisé en ce que** chacun des espaces creux (117) présente une deuxième ouverture (136) qui est fermée par un capteur de pression (126) affecté à l'espace creux (117).

6. Arrangement de traitement d'échantillons (100) pour un dispositif de dosage de liquides selon l'une des revendications précédentes,
**caractérisé en ce que** l'espace creux (117) est formé au moins en partie par un élément cylindrique (116, 118) et un élément de piston (114) inséré dans l'élément cylindrique (116, 118) depuis une extrémité frontale (116a) de celui-ci et mobile par rapport à l'élément cylindrique (116, 118), la première ouverture (122) étant formée sur l'autre extrémité frontale (118a) opposée à une extrémité frontale (116a) de l'élément cylindrique (116, 118).

7. Arrangement de traitement d'échantillons (100) pour un dispositif de dosage de liquides selon la revendication 6,
**caractérisé en ce que** l'élément de piston (114) est conçu comme un piston creux doté d'un passage (D) traversant l'élément de piston (114) qui débouche sur une extrémité frontale (114a) de l'élément de piston (114) de la première ouverture (122) orientée vers l'autre extrémité frontale (118a) de l'élément de cylindre (116, 118) opposée dans un premier espace creux partiel (154).

8. Arrangement de traitement d'échantillons (100) pour un dispositif de dosage de liquides selon la revendication 7,
**caractérisé en ce que** le passage (D) débouche sur l'autre extrémité frontale (114b) de l'élément de piston (114) de la deuxième ouverture (136) détournée de l'autre extrémité frontale (118a) de l'élément cylindrique (116, 118), opposée dans un deuxième espace creux partiel (156).

9. Arrangement de traitement d'échantillons pour un dispositif de dosage de liquides selon la revendication 7,
**caractérisé en ce que** l'autre extrémité frontale, détournée de l'autre extrémité frontale de l'élément cylindrique, constitue la deuxième ouverture.

10. Arrangement de traitement d'échantillons (100) pour un dispositif de dosage de liquides selon l'une des revendications 7 à 9,
**caractérisé en ce que** le passage (D) évolue sur le plan concentrique par rapport à l'axe longitudinal de l'élément de piston (114).

11. Arrangement de traitement d'échantillons (100) pour un dispositif de dosage de liquides selon une des revendications 6 à 10,
**caractérisé en ce que** le l'élément de piston (114) est fixé sur un dispositif de support (140) mobile par rapport à l'élément cylindrique (116, 118), le dispositif de support (140) comprenant une première plaque de support (142) sur laquelle l'élément de piston (114) est monté, l'axe longitudinal se trouvant substantiellement sur un plan orthogonal par rapport au plan de la première plaque de support (142).

12. Arrangement de traitement d'échantillons (100) pour un dispositif de dosage de liquides selon la revendication 11,
**caractérisé en ce que** le dispositif de support (140) comprend une deuxième plaque de support (144) qui est disposée essentiellement en parallèle par rapport à la première plaque de support (142) et est liée avec celle-ci en formant un espace intermédiaire (148), le capteur de pression (126) étant logé au moins en partie dans l'espace intermédiaire (148) formé entre la première plaque de support (142) et la deuxième plaque de support (144).

13. Arrangement de traitement d'échantillons (100) pour un dispositif de dosage de liquides selon l'une des revendications précédentes,
**caractérisé en ce que** le capteur de pression (126) comprend une membrane couvrant la deuxième ouverture (136).

14. Dispositif de dosage de liquides, en particulier, dispositif de pipetage comprenant un arrangement de traitement d'échantillon (100) selon l'une des revendications précédentes.
